# EUROPEAN PATENT SPECIFICATION

(11) **EP 2 528 805 B1**
(45) Date of publication and mention of the grant of the patent: **09.09.2015**
(21) Application number: 11703504.8
(22) Date of filing: 27.01.2011
(51) Int. Cl.: B63B 35/00, B63B 35/40, B63B 25/00

(54) **MAINTENANCE OF AN OFFSHORE WIND FARM MAKING USE OF AN ASSEMBLY OF A FLOATING HARBOUR SHIP AND A PLURALITY OF SHUTTLE VESSELS**
WARTUNG EINES OFFSHORE-WINDPARKS MIT NUTZUNG EINER ANORDNUNG AUS EINEM SEETÜCHTIGEN HAFENSCHIFF UND MEHREREN SHUTTLESCHIFFEN
ENTRETIEN D'UN PARC ÉOLIEN OFFSHORE UTILISANT UN ENSEMBLE COMPOSÉ D'UN NAVIRE PORTUAIRE FLOTTANT ET D'UNE PLURALITÉ DE BÂTIMENTS-NAVETTES

(30) Priority: 28.01.2010 NL 2004166
(43) Date of publication of application: 05.12.2012
(73) Proprietor: Z Knowledge B.V., 1976 CE Ijmuiden (NL)
(72) Inventor: PRINS, Reinout Klaar Norfolc Jaap, NL-1566 WG Assendelft (NL)
(74) Representative: EP&C
(86) International application number: PCT/NL2011/050052
(87) International publication number: WO 2011/093704

(56) References cited:
- EP-A1- 1 772 372
- EP-A2- 1 695 902
- WO-A1-93/04914
- GB-A- 527 599
- US-A- 2 370 916
- US-A- 4 075 860
- US-B1- 6 799 528

## Description

The invention relates to a method for use with the performance of maintenance to an offshore wind farm. The invention also relates to a harbour facility, in particular for use with such a method of performing maintenance to an offshore wind farm, and to an assembly of such a harbour facility and a plurality of shuttle vessels for transfer of service engineers from the harbour facility towards wind turbines of the farm and vice versa.

An offshore wind farm usually comprises a cluster of some hundreds wind turbines. the large number is necessary to be able to efficiently transfer the generated electricity from the farm to the shore. It has appeared that a rather intense maintenance of the offshore wind turbines is necessary. Otherwise one or more of the turbines are likely to get broke, which results in the wind farm no longer being able to yield a profitable return on investment. With present wind farms it has become common practice to visit each turbine once, sometimes twice a week for inspection and preventive maintenance. Also from time to time periodic actions need to be taken, like changing the oil in the gear box of the electrical generator or replacing some critical moving parts. In the case of defects, repairs need to be carried out.

For this high frequent visitation of the turbines it is known to have the service engineers together with their tools and spare parts delivered to the turbines by small shuttle vessels. The shuttle vessels used, which are also referred to as crew transfer vessels, are highly manoeuvrable small ships which each make tours around a selected number of the wind turbines to deliver the service engineers thereto, and to collect them again at the end of the day. An example of such shuttle vessels can be seen in EP 1 695 902. Depending on the progress made in the maintenance program, it is possible to have the service engineers visit more than one turbine per day. As soon as they have finished their maintenance to a certain turbine, they can call in the vessel. The turbines are each provided with a landing platform for landing the shuttle vessel against. Service engineers have to step from the shuttle vessel onto the turbine, for example directly onto the landing platform or onto a ladder at a lower end of the turbine tower and then climb up to the platform. From there the interior of the tower is accessible through an entrance door.

At this moment an increasing number of offshore wind farms are being built all over the world. Only in Europe it is already expected that the total number of offshore wind turbines is going to grow during the next decade to a total of more than 10,000 wind turbines in order to be able to generate a total amount of close to 50 gigaWatts of green electricity. The abovementioned high frequent periodic maintenance of such large numbers of turbines is going to require large scale logistics directed to the transfer of all the required service engineers, equipment, spare parts, etc to and from the turbines.

However, more and more of the presently foreseen offshore wind farms are to be located at distances of more than 30 miles offshore according to stricter governmental demands. Such large distances are disadvantageous for the presently known maintenance methods that are presently used with wind farms lying much closer to the shore. With the distance of more than 30 miles, the sailing times for the shuttle vessels become too long. Also the risk of bad weather has a negative impact. As soon as the wind is expected to rise above a certain threshold value, the vessels are no longer allowed to sail out to the wind farm anymore. The shuttle vessels even need to be called back to the harbour again as soon as the waves are expected to become too high for the small vessels to be able to safely land onto the wind turbines and/or to sail safely back to the harbour. This means that the further away a wind farm is distanced form that harbour, the more account has to be taken of any forecasted bad weather. Thus the more frequent it is going to occur that sailing out with the shuttle vessels towards the wind farm is deemed to be too risky and that maintenance is not possible during that period. This has an immediate negative effect on the total efficiency of the wind farm.

In the alternative it is known to deliver the service engineers and/or goods to and from the wind turbines by making use of helicopters. This however is rather hazardous and also very expensive for large scaled wind farms lying relative far off of the coast.

At this moment no methods are known for performing maintenance of large scaled wind farms lying relative far off of the coast in a cost effective manner.

The present invention aims to overcome at least some of the abovementioned disadvantages or to provide a usable alternative. In particular the invention aims to provide a safe, efficient and reliable method for use with maintenance of offshore wind farms, more in particular for offshore wind farms lying relative far out of the coast.

This aim is achieved by a method according to claim 1. The method comprises providing an assembly of a plurality of shuttle vessels and a seaworthy harbour ship. The shuttle vessels are designed for transfer of service engineers and/or goods to offshore wind turbines of an offshore wind farm. The harbour ship is designed as floating harbour facility for the vessels, and for this purpose comprises an internal harbour basin within the outlines of the ship and a plurality of mooring positions inside the basin for mooring the plurality of shuttle vessels inside the basin to the ship. The basin is provided with an entrance opening such that the shuttle vessels can sail into and out of it. The method starts with the sailing of the assembly of the plurality of shuttle vessels and the harbour ship towards a halt position, for example an anchoring position near or in the wind farm. Then the harbour ship is halted, for example anchored, there. Subsequently the plurality of shuttle vessels are sailed back and forth between the mooring positions inside the sheltered basin of the halted harbour ship and distinctive ones of the wind turbines of the wind farm for having service engineers performing maintenance to the turbines.

The floating harbour facility advantageously provides sheltered mooring positions for the smaller shuttle vessels inside its inner basin. The floating construction of the harbour ship suitably covers the basin in the sideways direction as much as possible from the wind and the waves. By having the harbour ship halted near the wind farm, the mooring positions of the shuttle vessels have come to lie very close to the wind turbines of the wind farm. Sailing times for the vessels from the harbour ship towards the turbines are kept to a minimum, independent of where the wind farm is located at the open sea and independent of how far the nearest mainland harbour is. Thus, even if a wind farm is located relative far offshore, in particular more than 30 miles away from the mainland, and comprises at least a hundred wind turbines which are each to be visited for maintenance frequently, in particular at least once per month, it is still possible to quickly and efficiently transfer service engineers between the harbour ship and the wind turbines. In the case of bad weather, the internal basin of the harbour ship offers a sheltered safe mooring and transfer facility for having both the service engineers and goods, like tools and spare parts, to embark and disembark the vessels. This makes it possible for the vessels to keep sailing out for a longer time. This helps in keeping a larger number of the turbines operating, which makes the efficiency of the wind farm profitable. In the case of bad weather suddenly arising, the vessels can easily and quickly sail back to the harbour ship to be safely moored inside the basin and sheltered therein from possible high waves and strong winds. Downtime during the maintenance of the wind farm because of forecasted bad weather conditions is minimized because the vessels can keep on sailing out for a longer time until close to the moment that the forecasted bad weather actually arrives at the location of the wind farm.

It is noted that GB 527,599 discloses a battle cruiser carrying a large number of torpedo boats inside its hull, which cruiser already comprises a water-basin within its outlines. This water-basin however is not equipped with mooring positions but is merely suited for quickly launching and re-embarking the torpedo boats one by one and after each other.

Preferably the harbour ship according to the present invention is equipped with sleeping quarters for the service engineers. This makes it possible for them to spend one or more nights at the harbour ship so that they do not have to loose time each day in getting back to the mainland. The harbour ship is further preferably equipped with storage facilities for storing spare parts and tools, and possibly also with a workplace for being able to quickly perform repairs to critical parts of the turbines.

The basin is provided with at least two, and preferably at least four, mooring positions in its basin and has dimensions large enough for mooring said at least two, and preferably at least four vessels inside the basin at the same time. In particular the vessels have a length and width which is at least 8 to 10 times smaller than the harbour ship.

Besides by being anchored when reaching its halt position, the harbour ship can also be kept in its halt position in other manners. In the alternative or in addition to being anchored, the harbour ship can also be kept substantially in its halt position with the aid of suitable dynamic positioning means. Those dynamic positioning means are designed for detecting a change in position of the ship, and to, each time the ship tends to drift away from its halt position, drive one or more propulsion means (thrusters, ship's screws or the like) in such a manner that the ship is able to substantially maintain its halt position near or in the wind farm. The use of dynamic positioning means offers the advantage that any infrastructure present on the sea bottom in or near the wind farm can not get damaged by it.

The harbour ship can be halted at a fixed position near the wind farm, in which the ship has the freedom to rotate around this halt position. Dependant on further development of the farm and gained experiences, it is possible to have the harbour ship relocated to other halt positions from time to time. In its halt position, the harbour ship preferably is maintained as much as possible directed with its basin entrance opening directed leeward. This keeps the basin and the mooring positions therein sheltered as much as possible from the wind and waves. For being able to each time reach this desired position, the harbour ship can be provided with propulsion means that comprise thrusters for turning the ship relative to its halting point.

If anchoring means are used, then those anchoring means of the harbour ship can comprise all kinds of mooring systems. Advantageously the anchoring means then may comprise a damping system for damping movements like oscillations of the harbour ship in response to environmental conditions. Also the anchoring means may comprise an active force reacting system which is designed for sensing any displacements/movements of the harbour ship and in response act a force on the harbour ship to compensate for these displacements/movements.

According to the invention the internal basin is kept filled with sea water at all times, that is to say both during the sailing of the assembly towards its anchoring position as well as during the sailing of the plurality of shuttle vessels back and forth between the halted ship and the wind turbines. This has the advantage that the basin is always immediately ready for the shuttles to be moored therein and/or to sail into and out of the basin. No additional measures need to be taken for this, and the ship can be halted or kept in its halt position at all times even during somewhat more extreme weather conditions. A lower upward floating power is then required for the ship. The shuttle vessels can always be kept floating all by themselves inside the basin even during transport of the ship towards a new halt position. Also the stability of the ship can get improved by the filled basin.

Furthermore according to the invention the internal basin is kept in open connection with the surrounding sea water. The open connection helps to keep the ship floating more calmly on the sea even during harsh weather conditions. In particular this open connection is formed by means of its entrance opening being open at all times for the shuttles to sail into and out of the basin when coming from or going to the surrounding sea water. Thus the surrounding sea water has the freedom to flow into and out of the basin while at the same time the shuttles have the full freedom to sail into and out of the basin without having to wait for a gait or the like to be opened.

In the alternative or in addition to the entrance opening being open at all times, the internal basin can also be kept in open connection with the surrounding sea water by means of the basin having no bottom or having a bottom which is at least partially open for the surrounding sea water to flow into and out of the basin. If the basin comprises a partially open bottom then this is preferably provided at such a distance beneath the sea level that it does not stand in the way for the vessels to sail into and out of the basin. The downwards open basin has the advantage that it makes the ship more lightweight, easier and/or cheaper to manufacture. Also the shuttle vessels can then sail into and out of the basin under all kinds of circumstances, not only under calm weather conditions, but also at heavy sea. This is particularly important for the intended use according to the invention, that is to say for the performing of maintenance of large scaled wind farms lying relative far off of the coast in a cost effective manner.

In order to keep the volume of water inside the basin as quiet as possible, damping means may be provided therein. In an embodiment, these damping means comprise adjustable flow through openings in the basin, which openings are adjusted in direction and/or dimensions in dependence of sea swell inside the basin. In an embodiment the damping means may comprise adjustable panels which at least partly delimit the basin at its lower side, in particular extending in a transverse direction of the harbour ship. The panels can then influence the water movement at the open surface of the basin without having to contribute to the floating power of the ship. Also it is noted that the panels in that case are not intended for carrying any kind of weight or load of any shuttle vessels moored inside the basin, not even during sailing of the ship towards a new halting position.

In a preferred embodiment the harbour ship comprises a floating construction with two longitudinal floating bodies delimiting opposite sides of the basin. The floating bodies can then be connected at their front sides by a bow which delimits the front side of the basin. Advantageously the floating bodies may each comprise an anti-rolling fluid tank. The tanks can then be connected to each other by a fluid duct in which pumping means are provided. This makes it possible to pump fluid from one tank to the other one in a direction which is opposite to a rolling movement of the floating construction around its longitudinal central axis in response to sea swell. The duct can extend underneath the basin at a depth where they do not stand in the way of the shuttle vessels to sail into and out of the basin. For example the ducts can extend through strengthening tubes which connect the longitudinal floating bodies with each other.

During sailing of the harbour ship to a new halting position, it is possible to have the shuttle vessels sail independently towards that location. It is also possible to first moor the shuttle vessels inside the basin and then tear them along with the harbour ship. In yet another embodiment the shuttle vessels can even be taken out of the water and placed upon a deck of the harbour ship to thus also sail along with the harbour ship. The placing of the shuttle vessels on top of a deck of the harbour ship can also be done during other circumstances, for example during extreme weather conditions.

The harbour ship may be provided with its own propulsion means for propelling it over sea to its halting position. In the alternative it may also be towed thereto by another ship or even by the shuttle vessels themselves.

Further advantageous embodiments are stated in the subclaims.

The invention also relates to an assembly of a harbour ship and a plurality of shuttle vessels.

The invention shall be explained in further detail with reference to the drawings, in which:
Fig. 1 shows a schematic view of an embodiment of an assembly of a harbour ship and several shuttle vessels according to the invention; and
Fig. 2a-c show a schematic view of an alternative embodiment of the harbour ship near an offshore wind farm seen from different angles.

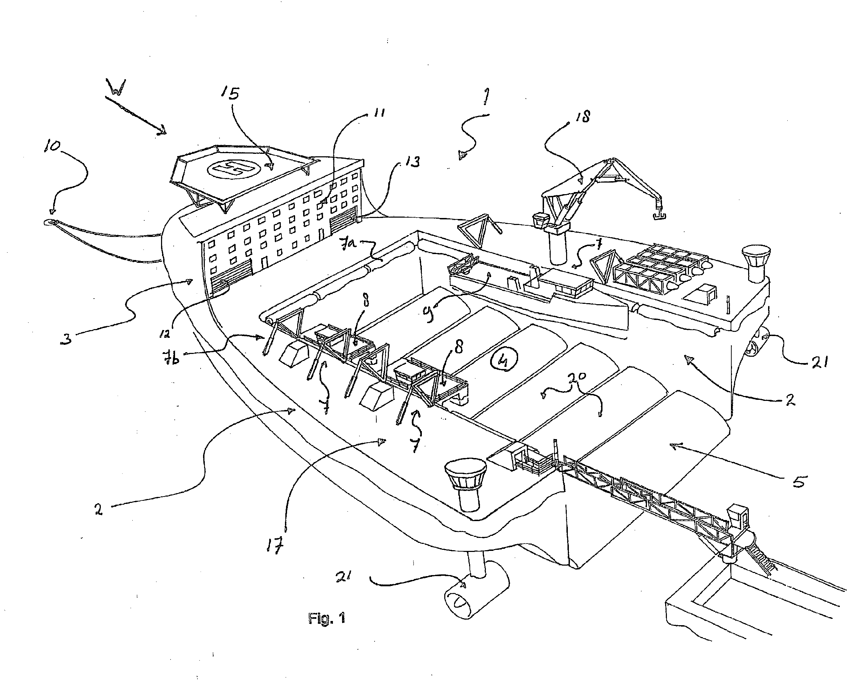

In fig. 1 the harbour ship is indicated with the reference numeral 1. The ship 1 comprises a seaworthy floating construction with two longitudinal floating bodies 2 connected at their front sides by a bow 3. The floating bodies 2 and the bow 3 delimit respective sides of a water basin 4 spared out within the outlines of the floating construction. The basin 4 has an entrance opening 5 at the back side of the ship 1. The basin 4 is provided with mooring positions 7 alongside which fenders 7a and davits 7b are provided. At these mooring positions 7 shuttle vessels 8, 9 are moored. The shuttle vessels 8, 9 are substantially smaller than the ship 1 and the basin 4 comprises more than enough space for each of them to sail into and out of the basin 4 without bumping against each other.

The ship 1 is firmly anchored to the bottom of the sea by means of anchoring means 10. The bow 3 is provided with sleeping quarters 11 for approximately 50 to 150 man, and workplaces and storage rooms 12, 13. On top of the sleeping quarters a helicopter landing platform 15 is provided for being able to quickly fly in personnel and supply goods whenever necessary.

The ship 1 comprises a substantially flat deck 17. On top of this deck 17 a crane 18 is provided for shipping heavy loads into and out of the vessels 8, 9, or if necessary to even lift an entire vessel out of the basin 4 and place it upon the deck 17. Particularly the vessels 8 are well suitable for this because of their catamaran shaped (flat) bottoms.

At its lower side at some distance beneath the water level the basin is delimited by adjustable panels 20 which extend in a transverse direction of the ship 1. The panels 20 can each be placed in different rotational positions (around their longitudinal axis) such that flow through openings between them are changed in direction and/or size. According to another design the flow is regulated by openings in a fixed bottom element, in which the size of the openings can be adapted in order to control the flow which can run through them.

The flow through these openings helps in damping possible waves occurring in the basin 4. Because of the wave movements, water keeps flowing inside and out these openings and with this each time looses some of its energy. This helps in keeping the water volume inside the basin 4 as quiet as possible.

At the backside the ship 1 is provided with thrusters 21 for helping in accurately positioning the ship 1 relative to its anchoring means 10, and in particular such that the ship 1 keeps lying with its bow 3 in the wind W and with the entrance opening 5 leeward. In that way the bow 3 keeps the basin 4 out of the wind, while the deck 17 prevents waves from directly influencing the water volume in the basin 4. For this the deck 17 preferably is high enough for the waves to not roll over them during bad weather.

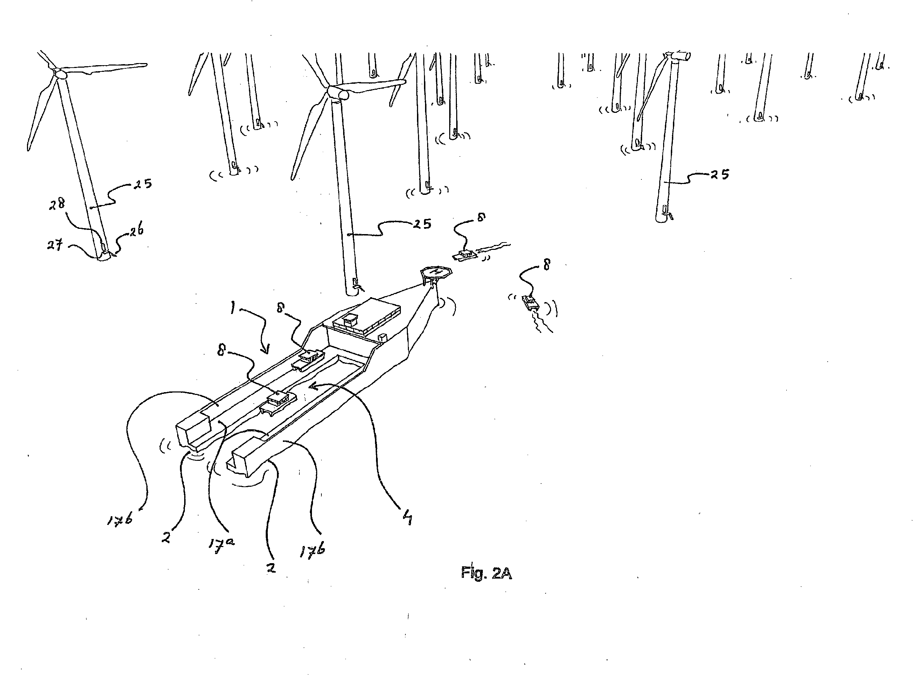

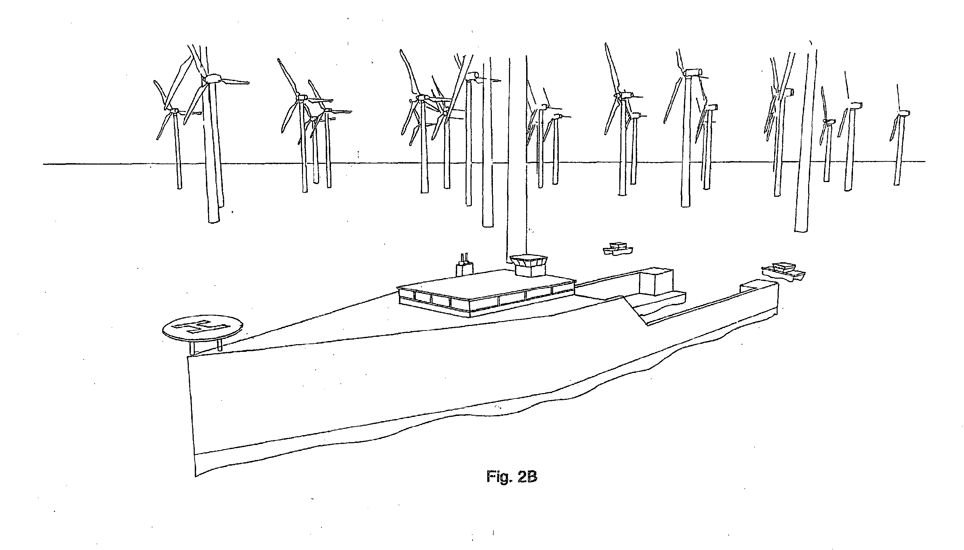

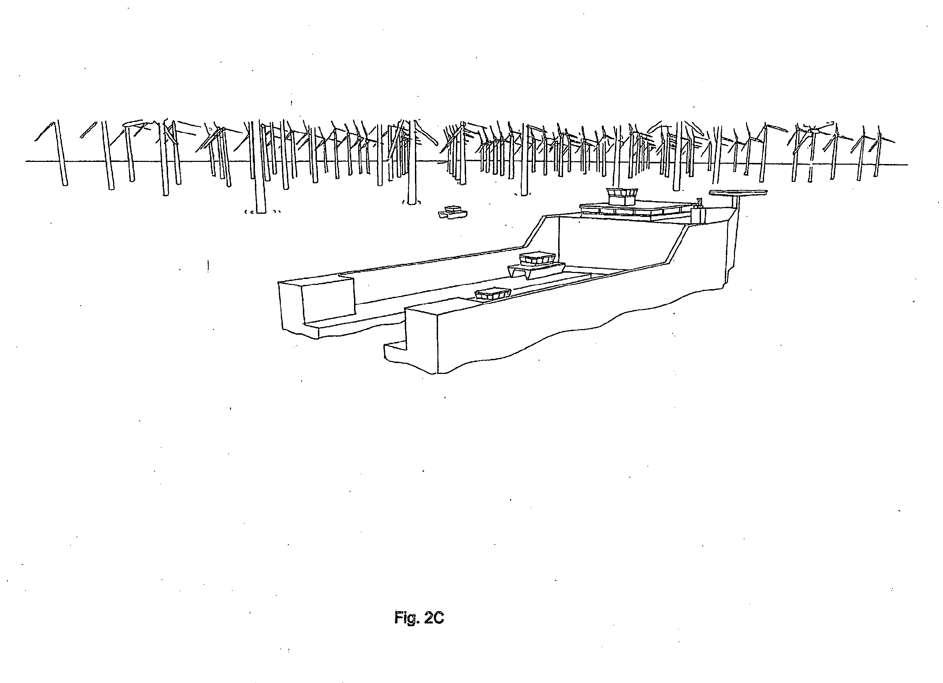

In fig. 2a-c an alternative embodiment of the harbour ship is shown. Similar parts have been given the same reference numerals. The harbour ship 1 is now sailed to a position next to one of the wind turbines 25 of an offshore wind farm. As can be seen the farm comprises a large number of turbines 25. Each turbine 25 is provided with a ladder 26 which leads to a landing platform 27 which gives access to a door 28 of the turbine mast. The shuttle vessels 8 are sailing tours along the respective turbines 25 to drop off or collect service engineers and goods. The vessels 8 start and end their tours each time in the basin 4 of the ship 1. Advantageously the sailing times for the vessels 8 are short because of the ship 1 lying so close to the farm.

As can be seen the ship 1 now comprises two longitudinal flat deck parts 17a for placing the vessels 8 upon. These flat deck parts 17a are sheltered by deck parts 17b which are upstanding from the deck parts 17a to a higher level. The deck parts 17b shield both the basin 4 and the deck parts 17a (including any vessels 8 placed thereupon) from wind and waves.

Besides the embodiments shown numerous variants are possible. For example the ship with its internal basin and the smaller vessels may have other shapes and/or dimensions. Also the mooring positions inside the basin may be designed differently. Not only can the invention be used for the maintenance of a wind farm lying at a distance of more than 30 miles offshore, it can also be used for wind farms closer to the shore. There also the advantage goes that the harbour ship advantageously can be equipped with all kinds of facilities which are useful for performing optimal maintenance to the turbines. The harbour ship can also be used for other actions to be taken on sea where the use of a plurality of small vessels to sail into and out of the internal basin of the harbour ship might come in handy.

Thus an optimal method and assembly are provided with which it is really possible to have the large number of wind turbines of an offshore wind farm lying far out of the coast visited for maintenance in a high frequent manner.

## Claims

1. A method for use with maintenance of an offshore wind farm comprising a plurality of offshore wind turbines (25) installed in open sea, in which the method comprises:
- providing a shuttle vessel (8, 9) for transfer of service engineers and/or goods to and from the wind turbines (25);
- sailing the shuttle vessel (8, 9) to one of the wind turbines (25);
- landing the shuttle vessel (8, 9) against the wind turbine (25) for allowing transfer of the service engineers and/or goods between the shuttle vessel (8, 9) and the wind turbine (25);
- sailing the shuttle vessel (8, 9) to another wind turbine (25) for allowing transfer of service engineers and/or goods between the shuttle vessel (8, 9) and that other wind turbine (25); and
- sailing the shuttle vessel (8, 9) to a harbour facility and mooring it there for allowing exchange of the service engineers and/or the goods between the shuttle vessel (8, 9) and the harbour facility before sailing the shuttle vessel (8, 9) out to another wind turbine (25); in which the method makes use of an assembly of a plurality of the abovementioned shuttle vessels (8, 9) and a seaworthy harbour ship (1) which serves as the abovementioned harbour facility and for this comprises an internal harbour basin (4) within outlines of the ship (1) and a plurality of mooring positions (7) for mooring the plurality of shuttle vessels (8, 9) to the ship when lying inside the basin (4), the basin (4) being provided with an entrance opening (5) for the shuttle vessels (8, 9) to sail into and out of the basin (4),
wherein the method further comprises:
- sailing the assembly of the plurality of shuttle vessels (8, 9) and the harbour ship (1) towards a halt position near or in the wind farm and substantially keeping the harbour ship (1) in its halt position;
- sailing the plurality of shuttle vessels (8, 9) back and forth between the mooring positions (7) of the halted harbour ship (1) and distinctive ones of the wind turbines (25) for performing the maintenance thereto; and
- mooring the plurality of shuttle vessels (8, 9) to the mooring positions (7) when lying inside the basin (4),
in which both during the sailing of the assembly towards the halt position as well as during the sailing of the plurality of shuttle vessels (8, 9) back and forth between the halted ship (1) and the wind turbines (25), the internal basin (4) is kept filled with sea water,
**characterized in that,**
both during the sailing of the assembly towards the halt position as well as during the sailing of the plurality of shuttle vessels (8, 9) back and forth between the halted ship (1) and the wind turbines (25), the internal basin (4) is kept in open connection with the surrounding sea water by means of its entrance opening (5) being open for the shuttles (8, 9) to sail into and out of the basin (4) at all times, and/or by means of the basin (4) having its bottom at least partially open for the surrounding sea water to flow into and out of the basin (4).

2. Method according to claim 1, wherein the harbour ship (1), while being kept substantially in its halt position, is maintained in a position in which the entrance opening (5) for the shuttle vessels (8, 9) to sail into the basin (4) lies leeward.

3. Method according to claim 1 or 2, wherein adjustable flow through openings of damping means are provided in the basin (4) which openings are adjusted in dependence of sea swell inside the basin.

4. Method according to one of the preceding claims, wherein the harbour ship (1) is halted near or in a wind farm which lies at least 30 miles offshore and comprises at least a hundred wind turbines (25) which are each visited for maintenance within a period of less than a month by using a number of at least two of said shuttle vessels (8, 9) at the same time and mooring them at least during the night during the maintenance period inside the basin (4) of the harbour ship (1).

5. Assembly of a harbour ship (1) and a plurality of shuttle vessels (8, 9), in particular for use in the method according to one of the preceding claims, comprising:
- a seaworthy floating construction;
- halting means for substantially keeping the floating construction in a halt position at open sea;
- an internal harbour basin (4) within the outlines of the floating construction which basin (4) has an entrance opening for shuttle vessels (8, 9) to sail into the basin (4);
- said plurality of shuttle vessels (8, 9) for transfer of service engineers and/or goods to and from wind turbines (25); and
- a plurality of mooring positions (7) for mooring the plurality of shuttle vessels (8, 9) to the floating construction when lying inside the harbour basin (4),
wherein the internal basin (4) has an open connection with the surrounding sea water such that it is kept filled with sea water both during sailing and anchoring.

6. Assembly according to claim 5, wherein the internal basin (4) has its entrance opening (5) in open connection with the surrounding sea water.

7. Assembly according to claim 5 or 6, wherein the internal basin (4) has an at least partially open bottom such that the basin (4) is in open connection with the surrounding sea water.

8. Assembly according to one of claims 5-7, wherein the basin (4) is provided with damping means that comprise adjustable flow through openings for damping sea water flowing through these openings.

9. Assembly according to claim 7 and 8, wherein the damping means comprise adjustable panels (20) which at least partly delimit the basin (4) at its lower side, in particular extending in a transverse direction of the harbour ship (1).

10. Assembly according to one of the preceding claims 5-9, wherein the floating construction comprises two longitudinal floating bodies (2) delimiting opposite sides of the basin (4), which floating bodies (2) are connected at their front sides by a bow (3).

11. Assembly according to claim 10, wherein the floating bodies (2) each comprise an anti-rolling fluid tank, which tanks are connected to each other by a fluid duct in which pumping means are provided for pumping fluid from one tank to the other one in a direction which is opposite to a rolling movement of the floating construction around its longitudinal central axis in response to sea swell.

## Patentansprüche

1. Verfahren zur Verwendung bei einer Wartung eines Offshore-Windparks, welcher mehrere Offshore-Windturbinen (25) umfasst, welche auf offener See installiert sind, wobei das Verfahren umfasst:
- Bereitstellen eines Pendelverkehrschiffs (8, 9) für einen Transport von Serviceingenieuren und/oder Gütern zu und von den Windturbinen (25);
- Fahren des Pendelverkehrschiffs (8, 9) zu einer der Windturbinen (25);
- Anlanden des Pendelverkehrschiffs (8, 9) an der Windturbine (25), um einen Transport der Serviceingenieure und/oder Güter zwischen dem Pendelverkehrschiff (8, 9) und der Windturbine (25) zu ermöglichen;
- Fahren des Pendelverkehrschiffs (8, 9) zu einer anderen Windturbine (25), um einen Transport von Serviceingenieuren und/oder Gütern zwischen dem Pendelverkehrschiff (8, 9) und der anderen Windturbine (25) zu ermöglichen; und
- Fahren des Pendelverkehrschiffs (8, 9) zu einer Hafenanlage und Festmachen von diesem dort, um einen Austausch der Serviceingenieure und/oder der Güter zwischen dem Pendelverkehrschiff (8, 9) und der Hafenanlage zu ermöglichen, bevor das Pendelverkehrschiff (8, 9) zu einer anderen Windturbine (25) fährt;
wobei das Verfahren eine Anordnung von mehreren der zuvor erwähnten Pendelverkehrschiffe (8, 9) und einem seetüchtigen Hafenschiff (1) verwendet, welches als die zuvor erwähnte Hafenanlage dient und dafür ein internes Hafenbecken (4) innerhalb von Begrenzungen des Schiffs (1) und mehrere Festmachpositionen (7) zum Festmachen der mehreren Pendelverkehrschiffe (8, 9) an dem Schiff umfasst, wenn sie innerhalb des Beckens (4) liegen, wobei das Becken (4) mit einer Eingangsöffnung (5) für die Pendelverkehrschiffe (8, 9) versehen ist, um in das und aus dem Becken (4) zu fahren,
wobei das Verfahren ferner umfasst:
- Fahren der Anordnung der mehreren Pendelverkehrschiffe (8, 9) und des Hafenschiffs (1) in Richtung einer Halteposition in der Nähe oder in dem Windpark und Halten des Hafenschiffs (1) im Wesentlichen in seiner Halteposition;
- Fahren der mehreren Pendelverkehrschiffe (8, 9) hin und her zwischen den Festmachpositionen (7) des angehaltenen Hafenschiffs (1) und den Windturbinen (25) zum Ausführen der Wartung daran; und
- Festmachen der mehreren Pendelverkehrschiffe (8, 9) an den Festmachpositionen (7), wenn sie innerhalb des Beckens (4) liegen,
wobei sowohl während des Fahrens der Anordnung in Richtung der Halteposition als auch während des Fahrens der mehreren Pendelverkehrschiffe (8, 9) hin und her zwischen dem angehaltenen Schiff (1) und den Windturbinen (25) das interne Becken (4) mit Seewasser gefüllt bleibt,
**dadurch gekennzeichnet, dass**
sowohl während des Fahrens der Anordnung in Richtung der Halteposition als auch während des Fahrens der mehreren Pendelverkehrschiffe (8, 9) hin und her zwischen dem angehaltenen Schiff (1) und den Windturbinen (25) das interne Becken (4) in einer offenen Verbindung mit dem umgebenden Seewasser gehalten wird, indem seine Eingangsöffnung (5) offen für die Pendler (8, 9) ist, um zu allen Zeiten in das und aus dem Becken (4) zu fahren, und/oder indem eine Unterseite des Beckens (4) zumindest teilweise offen für das umgebende Seewasser ist, um in das oder aus dem Becken (4) zu fließen.

2. Verfahren nach Anspruch 1, wobei das Hafenschiff (1), während es im Wesentlichen in seiner Halteposition gehalten wird, in einer Position gehalten wird, in welcher die Eingangsöffnung (5) für die Pendelverkehrschiffe (8, 9) zum Fahren in das Becken (4) leeseitig liegt.

3. Verfahren nach Anspruch 1 oder 2, wobei eine einstellbare Strömung durch Öffnungen von Dämpfungsmitteln in dem Becken (4) vorgesehen ist, wobei die Öffnungen in Abhängigkeit von einem Seegang innerhalb des Beckens eingestellt werden.

4. Verfahren nach einem der vorhergehenden Ansprüche, wobei das Hafenschiff (1) in der Nähe oder in einem Windpark gehalten wird, welcher mindestens 30 Meilen ablandig liegt und mindestens hundert Windturbinen (25) umfasst, welche für eine Wartung innerhalb einer Zeitspanne von weniger als einem Monat jeweils besucht werden, indem eine Anzahl von mindestens zwei der Pendelverkehrschiffe (8, 9) zur gleichen Zeit verwendet werden und zumindest während der Nacht während der Wartungszeitdauer innerhalb des Beckens (4) des Hafenschiffs (1) festgemacht werden.

5. Anordnung eines Hafenschiffs (1) und mehrerer Pendelverkehrschiffe (8, 9), insbesondere für eine Verwendung des Verfahrens gemäß einem der vorhergehenden Ansprüche, umfassend:
- eine seetüchtige Schwimmkonstruktion;
- Haltemittel zum Halten der Schwimmkonstruktion im Wesentlichen in einer Halteposition auf offener See;
- ein internes Hafenbecken (4) innerhalb der Begrenzungen der Schwimmkonstruktion, wobei das Becken (4) eine Eingangsöffnung für Pendelverkehrschiffe (8, 9) aufweist, um in das Becken (4) zu fahren;
- die mehreren Pendelverkehrschiffe (8, 9) zum Transportieren von Serviceingenieuren und/oder Gütern zu und von den Windturbinen (25); und
- mehrere Festmachpositionen (7) zum Festmachen der mehreren Pendelverkehrschiffe (8, 9) an der Schwimmkonstruktion, wenn sie innerhalb des Hafenbeckens (4) liegen,
wobei das interne Becken (4) eine offene Verbindung mit dem umgebenden Seewasser derart aufweist, dass es mit Seewasser sowohl beim Fahren als auch beim Ankern gefüllt bleibt.

6. Anordnung nach Anspruch 5, wobei die Eingangsöffnung (5) des internen Beckens (4) in einer offenen Verbindung mit dem umgebenden Seewasser ist.

7. Anordnung nach Anspruch 5 oder 6, wobei das interne Becken (4) zumindest eine teilweise offene Unterseite derart aufweist, dass das Becken (4) in einer offenen Verbindung mit dem umgebenden Seewasser ist.

8. Anordnung nach einem der Ansprüche 5-7, wobei das Becken (4) mit Dämpfungsmitteln versehen ist, welche eine einstellbare Strömung durch Öffnungen zum Dämpfen einer Meerwasserströmung durch diese Öffnungen umfasst.

9. Anordnung nach Anspruch 7 und 8, wobei die Dämpfungsmittel einstellbare Platten (20) umfassen, welche das Becken (4) an seiner unteren Seite zumindest teilweise begrenzen und sich insbesondere in einer Querrichtung des Hafenschiffs (1) erstrecken.

10. Anordnung nach einem der vorhergehenden Ansprüche 5-9, wobei die Schwimmkonstruktion zwei Schwimmkörper (2) in Längsrichtung umfasst, welche gegenüberliegende Seiten des Beckens (4) begrenzen, wobei die Schwimmkörper (2) an ihren Vorderseiten mit einem Bug (3) verbunden sind.

11. Anordnung nach Anspruch 10, wobei die Schwimmkörper (2) jeweils Schlingerdämpferflüssigkeitstanks umfassen, wobei die Tanks miteinander über eine Flüssigkeitsleitung verbunden sind, worin Pumpmittel zum Pumpen eines Fluids von einem Tank zu dem anderen in einer Richtung vorgesehen sind, welche entgegengesetzt zu einer Rollbewegung der Schwimmkonstruktion um ihre mittlere Längsachse als Reaktion auf einen Seegang ist.

## Revendications

1. Procédé destiné à être utilisé avec l'entretien d'un parc d'éoliennes offshore comprenant une pluralité d'éoliennes offshore (25) installées en pleine mer, dans lequel le procédé comprend les étapes consistant à :
prévoir un bâtiment navette (8, 9) pour le transfert des ingénieurs services et/ou des marchandises vers et depuis les éoliennes (25) ;
faire naviguer le bâtiment navette (8, 9) vers l'une des éoliennes (25) ;
faire accoster le bâtiment navette (8, 9) contre l'éolienne (25) pour permettre le transfert des ingénieurs services et/ou des marchandises entre le bâtiment navette (8, 9) et l'éolienne (25) ;
faire naviguer le bâtiment navette (8, 9) vers une autre éolienne (25) pour permettre le transfert des ingénieurs services et/ou des marchandises entre le bâtiment navette (8, 9) et cette autre éolienne (25) ; et
faire naviguer le bâtiment navette (8, 9) vers une installation portuaire et l'amarrer pour permettre l'échange des ingénieurs services et/ou des marchandises entre le bâtiment navette (8, 9) et l'installation portuaire avant de faire naviguer le bâtiment navette (8, 9) vers une autre éolienne (25) ;
dans lequel le procédé utilise un ensemble composé d'une pluralité des bâtiments navettes (8, 9) mentionnés ci-dessus et d'un navire portuaire en état de naviguer (1) qui sert d'installation portuaire mentionnée ci-dessus et pour cela, il comprend un bassin portuaire interne (4) dans la limite des contours du navire (1) et une pluralité de positions d'amarrage (7) pour amarrer la pluralité de bâtiments navettes (8, 9) au navire lorsqu'ils se trouvent à l'intérieur du bassin (4), le bassin (4) étant prévu avec une ouverture d'entrée (5) pour que les bâtiments navettes (8, 9) naviguent à l'intérieur et à l'extérieur du bassin (4),
dans lequel le procédé comprend en outre les étapes consistant à :
faire naviguer l'ensemble composé de la pluralité de bâtiments navettes (8, 9) et du navire portuaire (1) vers une position d'arrêt à proximité ou dans le parc d'éoliennes et maintenir sensiblement le navire portuaire (1) dans sa position d'arrêt ;
faire naviguer la pluralité de bâtiments navettes (8, 9) selon un mouvement de va-et-vient entre les positions d'amarrage (7) du navire portuaire (1) immobilisé et des éoliennes distinctives des éoliennes (25) pour réaliser leur entretien ; et
amarrer la pluralité de bâtiments navettes (8, 9) aux positions d'amarrage (7) lorsqu'ils se trouvent à l'intérieur du bassin (4),
dans lequel, à la fois pendant la navigation de l'ensemble vers la position d'arrêt ainsi que pendant la navigation de la pluralité de bâtiments navettes (8, 9) selon un mouvement de va-et-vient entre le navire (1) immobilisé et les éoliennes (25), le bassin interne (4) est maintenu rempli avec de l'eau de mer,
**caractérisé en ce que :**
à la fois pendant la navigation de l'ensemble vers la position d'arrêt ainsi que pendant la navigation de la pluralité de bâtiments navettes (8, 9) selon un mouvement de va-et-vient entre le navire (1) immobilisé et les éoliennes (25), le bassin interne (4) est maintenu en raccordement ouvert avec l'eau de mer environnante au moyen de son ouverture d'entrée (5) qui est ouverte pour que les navettes (8, 9) naviguent à l'intérieur et à l'extérieur du bassin (4) à tous moments, et/ou au moyen du bassin (4) qui a son fond au moins partiellement ouvert pour que l'eau de mer environnante s'écoule à l'intérieur et à l'extérieur du bassin (4).

2. Procédé selon la revendication 1, dans lequel le navire portuaire (1), tout en étant maintenu sensiblement dans sa position d'arrêt, est maintenu dans une position dans laquelle l'ouverture d'entrée (5) pour que les bâtiments navettes (8, 9) naviguent à l'intérieur du bassin (4), est sous le vent.

3. Procédé selon la revendication 1 ou 2, dans lequel les ouvertures débouchantes d'écoulement ajustables des moyens d'amortissement sont prévues dans le bassin (4), lesquelles ouvertures sont ajustées en fonction de la houle dans le bassin.

4. Procédé selon l'une des revendications précédentes, dans lequel le navire portuaire (1) est immobilisé à proximité ou dans un parc d'éoliennes qui se trouve à au moins 30 miles en pleine mer et comprend au moins une centaine d'éoliennes (25) qui sont chacune visitées pour l'entretien dans une période de moins d'un mois en utilisant un nombre d'au moins deux desdits bâtiments navettes (8, 9) à la fois et en les amarrant au moins pendant la nuit pendant la période d'entretien à l'intérieur du bassin (4) du navire portuaire (1).

5. Ensemble composé d'un navire portuaire (1) et d'une pluralité de bâtiments navettes (8, 9), en particulier, destiné à être utilisé dans le procédé selon l'une des revendications précédentes, comprenant :
une construction flottante en état de naviguer ;
des moyens d'arrêt pour maintenir sensiblement la construction flottante dans une position d'arrêt en pleine mer;
un bassin portuaire interne (4) dans la limite des contours de la construction flottante, lequel bassin (4) a une ouverture d'entrée pour que les bâtiments navettes (8, 9) naviguent dans le bassin (4) ;
ladite pluralité de bâtiments navettes (8, 9) pour le transfert des ingénieurs services et/ou des marchandises vers et depuis les éoliennes (25) ; et
une pluralité de positions d'amarrage (7) pur amarrer la pluralité de bâtiments navettes (8, 9) à la construction flottante lorsqu'ils se trouvent à l'intérieur du bassin portuaire (4),
dans lequel le bassin interne (4) a un raccordement ouvert avec l'eau de mer environnante de sorte qu'il est maintenu rempli avec de l'eau de mer à la fois pendant la navigation et pendant l'ancrage.

6. Ensemble selon la revendication 5, dans lequel le bassin interne (4) a son ouverture d'entrée (5) en raccordement ouvert avec l'eau de mer environnante.

7. Ensemble selon la revendication 5 ou 6, dans lequel le bassin interne (4) a un fond au moins partiellement ouvert de sorte que le bassin (4) est en raccordement ouvert avec l'eau de mer environnante.

8. Ensemble selon l'une des revendications 5 à 7, dans lequel le bassin (4) est prévu avec des moyens d'amortissement qui comprennent des ouvertures débouchantes d'écoulement ajustables pour amortir l'eau de mer s'écoulant à travers ces ouvertures.

9. Ensemble selon la revendication 7 et 8, dans lequel les moyens d'amortissement comprennent des panneaux ajustables (20) qui délimitent au moins partiellement le bassin (4) au niveau de son côté inférieur, en particulier s'étendant dans une direction transversale du navire portuaire (1).

10. Ensemble selon l'une des revendications 5 à 9, dans lequel la construction flottante comprend deux corps flottants longitudinaux (2) délimitant des côtés opposés du bassin (4), lesquels corps flottants (2) sont raccordés au niveau de leurs côtés avant par une proue (3).

11. Ensemble selon la revendication 10, dans lequel les corps flottants (2) comprennent chacun une citerne de fluide à roulis, lesquelles citernes sont raccordées entre elles par un conduit de fluide dans lequel des moyens de pompage sont prévus pour pomper le fluide d'une citerne à l'autre dans une direction qui est opposée à un mouvement de roulis de la construction flottante autour de son axe longitudinal central en réponse à la houle.
